(19) Europäisches Patentamt
European Patent Office
Office européen des brevets

(11) Veröffentlichungsnummer: **0 327 501**
**A2**

(12) # EUROPÄISCHE PATENTANMELDUNG

(21) Anmeldenummer: **89810068.0**

(22) Anmeldetag: **25.01.89**

(51) Int. Cl.⁴: **C 08 G 65/40**
C 08 J 5/24

(30) Priorität: **03.02.88 CH 382/88**

(43) Veröffentlichungstag der Anmeldung:
**09.08.89 Patentblatt 89/32**

(84) Benannte Vertragsstaaten:
**CH DE ES FR GB IT LI NL SE**

(71) Anmelder: **CIBA-GEIGY AG**
**Klybeckstrasse 141**
**CH-4002 Basel (CH)**

(72) Erfinder: **Eldin, Sameer H., Dr.**
**Route de Schiffenen 10**
**CH-1700 Fribourg (CH)**

(54) **Lineare Polyätherharze.**

(57) Lineare Polyätherharze, enthaltend 100 bis 1 Mol % des wiederkehrenden Strukturelementes der Formel I

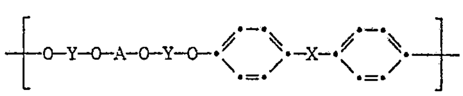

(I)

und 99 bis 0 Mol % des wiederkehrenden Strukturelementes der Formel II

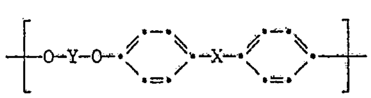

(II),

worin A ein lineares unsubstituiertes oder methylsubstituiertes Alkylen mit 1 bis 100 C-Atomen in der linearen Alkylenkette bedeutet, X für im Anspruch 1 angegebene Brückenglieder steht und Y einen im Anspruch 1 angegebenen aromatischen Rest eines zweiwertigen Phenols bedeutet, stellen Thermoplaste mit hohen Glasumwandlungstemperaturen und hohen mechanischen Festigkeiten dar.

EP 0 327 501 A2

**Beschreibung**

## Lineare Polyätherharze

Die vorliegende Erfindung betrifft neue, unter Verwendung von Bis-(hydroxyphenoxy)-alkanen hergestellte Polyätherharze, Verfahren zu deren Herstellung und die aus den neuen Polyätherharzen hergestellten Formstoffe oder Beschichtungen.

Aus dem US-Patent 4,667,010 sind Polyätherharze auf Basis von Bis-phenolen, worin die Hydroxyphenylreste über Alkylengruppen gebunden sind, bekannt. Es wurde nun gefunden, dass Polyäther auf Basis von Bisphenolen, worin die Hydroxyphenylreste über $\alpha,\omega$-Oxy-alkylengruppen gebunden sind, höhere Glasumwandlungstemperaturen (Tg) und bedeutend höhere mechanische Festigkeiten aufweisen, ohne dass sich Nachteile bei der Verarbeitung der neuen Polyätherharze ergeben.

Gegenstand der vorliegenden Erfindung sind somit lineare Polyätherharze mit einer spezifischen Viskosität von 0,1 bis 2,5, gemessen bei 30°C an einer 2 %-igen Lösung in Dimethylformamid, die, bezogen auf die Gesamtmenge der im Polyätherharz vorhandenen Strukturelemente, 100 bis 1 Mol % des wiederkehrenden Strukturelementes der Formel I

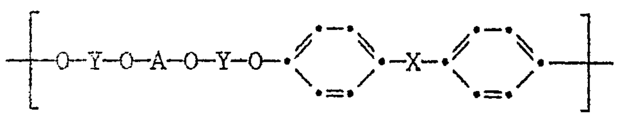 (I)

und 99 bis 0 Mol % des wiederkehrenden Strukturelementes der Formel II

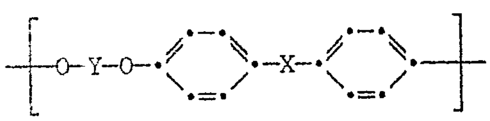 (II)

enthalten, worin A ein lineares unsubstituiertes oder methylsubstituiertes Alkylen mit 1 bis 100 C-Atomen in der linearen Alkylenkette bedeutet, X für $-SO_2-$, -CO-, -SO-, -N=N-, $-CF_2-CF_2-$,

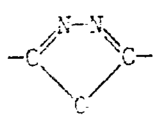 , 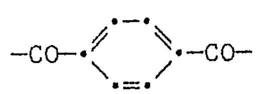 , 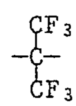 , —CH=CH— , 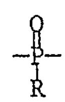 ,

worin R ein Alkyl mit 1 bis 8 C-Atomen bedeutet, oder

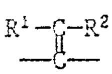 ,

worin $R^1$ und $R^2$ je ein H- oder Halogenatom bedeuten, steht und Y einen Rest der Formel III oder IV

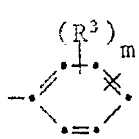 (III) oder 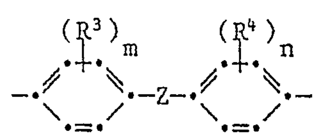 (IV)

bedeutet, worin m und n je für Null oder eine Zahl von 1 bis 4 stehen, $R^3$ und $R^4$ gleich oder verschieden sind und je ein Halogenatom, unsubstituiertes oder phenylsubstituiertes Alkyl mit 1 bis 4 C-Atomen oder Alkoxy

mit 1 bis 4 C-Atomen bedeuten, und, wenn m und n je für 1 oder 2 stehen, $R^3$ und $R^4$ auch je ein Allyl oder 1-Propenyl bedeuten, und Z für eine direkte Bindung oder einen der folgenden Reste -O- , -SO- , $-SO_2-$ , -S- , -S-S- ,

$-O-$ , $-SO-$ , $-SO_2-$ , $-S-$ , $-S-S-$ , 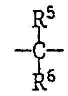 , worin $R^5$ und $R^6$

worin $R^5$ und $R^6$ unabhängig voneinander je ein H-Atom, Alkyl mit 1 bis 4 C-Atomen oder Phenyl bedeuten,

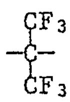 , 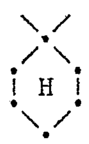 , 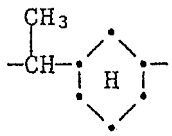 oder 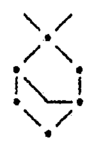 steht.

Vorzugsweise enthalten die erfindungsgemässen Polyätherharze 100 bis 20 Mol %, insbesondere 100 bis 50 Mol %, des wiederkehrenden Strukturelementes der Formel I und 80 bis 0 %, insbesondere 50 bis 0 Mol % des wiederkehrenden Strukturelementes der Formel II.

Die erfindungsgemässen Polyätherharze weisen ferner vorzugsweise eine spezifische Viskosität von 0,2 bis 2,0, insbesondere von 0,2 bis 1,5, auf.

Es ist allgemein bekannt, dass die spezifische Viskosität ein Mass für das Molekulargewicht von Polymeren darstellt. Die angegebenen Werte der spezifischen Viskosität von 0,1 bis 2,5 entsprechen einem durchschnittlichen Molekulargewichtsbereich von etwa 1000 bis 50 000.

Der Rest A im Strukturelement der Formel I ist vorzugsweise ein unsubstituiertes Alkylen mit 1 bis 20 C-Atomen, insbesondere mit 4 bis 10 C-Atomen, in der linearen Alkylenkette.

Der Rest X in den Strukturelementen der Formeln I und II steht vorzugsweise für $-SO_2-$, -CO-, -SO-, $-CF_2-CF_2-$,

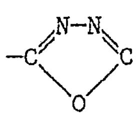 , $-N{=}N-$ , 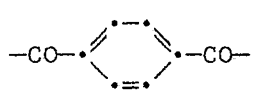 oder 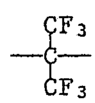 ,

insbesondere für $-SO_2-$ oder -CO-.

Der Rest Y im Strukturelement der Formel I steht vorzugsweise für m-oder p-Phenylen, insbesondere für p-Phenylen.

Im Strukturelement der Formel II bedeutet Y vorzugsweise einen Rest der Formel III oder IV, worin m und n Null bedeuten und Z für eine direkte Bindung oder einen der folgenden Reste -O-, -SO-, $-SO_2-$,

$-S-$, $-S-S-$, $-CH_2-$, 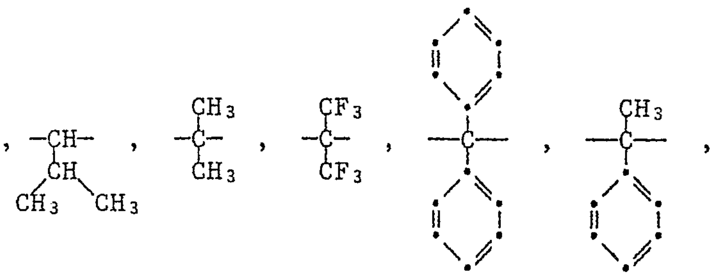,

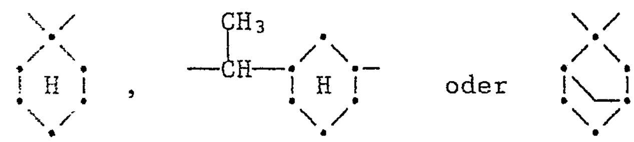 oder steht.

Insbesondere bedeutet im Strukturelement der Formel II Y einen Rest der Formel IV, worin m und n für null stehen und Z Isopropyliden oder Methylen bedeutet.

Die erfindungsgemässen Polyätherharze können z.B. hergestellt werden, indem man eine Dihalogenverbindung der Formel V

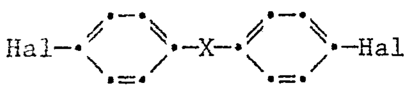 (V)

in äquimolaren Mengen mit einem $\alpha,\omega$-Di-(hydroxyaryloxy)-alkan der Formel VI
HO-Y-O-A-O-Y-OH (VI)
oder mit einem Gemisch aus einer Verbindung der Formel VI und einem darin bis zu 99 Mol %, vorzugsweise bis zu 80 Mol %, enthaltenden Phenol der Formel VII
HO-Y-OH (VII),
worin X. A und Y die gleiche Bedeutung wie in Formel I bzw. II haben und Hal für ein Halogenatom, vorugsweise ein Fluor- oder Chloratom, insbesondere Chloratom, steht, in Gegenwart von Alkali in einem polaren aprotischen Lösungsmittel polykondensiert, bis das erhaltene Polyätherharz eine spezifische Viskosität von 0,1 bis 2,5, gemessen bei 30°C an einer 2 %-igen Lösung in Dimethylformamid, aufweist.

Die besonders bevorzugten Polyätherharze werden hergestellt, indem man eine Dihalogenverbindung der Formel V mit einem $\alpha,\omega$-Di-(p-hydroxyphenoxy)-alkan der Formel VI oder einem Gemisch aus einer Verbindung der Formel VI und einem darin bis zu 50 Mol % enthaltenden Phenol der Formel VII in äquimolaren Mengen polykondensiert.

Unter äquimolaren Mengen versteht man in diesem Zusammenhang ein Molverhältnis von etwa 0,8 vis 1,2.

Die Polykondensationsreaktion wird vorzugsweise bis zu einer spezifischen Viskosität von 0,2 bis 2,0, insbesondere 0,2 bis 1,5, der Polyätherharze durchgeführt.

Vorzugsweise führt man das Verfahren ferner in Gegenwart eines Schleppmittels, zum Beispiel Chlorbenzol, durch, um das bei der Umsetzung gebildete Wasser azeotrop aus dem Reaktionsgemisch entfernen zu können.

Als Alkali verwendet man bei dem Verfahren in der Regel starke Alkalien, wie festes Natriumhydroxid oder wässrige Natronlauge, doch können auch andere alkalische Reagentien, wie Kaliumhydroxid, Bariumhydroxid, Calciumhydroxid, Natrium- oder Kaliumcarbonat, Verwendung finden.

Polare, aprotische Lösungsmittel, die beim Verfahren zur Herstellung der erfindungsgemässen Polyätherharze eingesetzt werden können, sind beispeilsweise Dimethylsulfoxid, Dimethylacetamid, Diäthylacetamid, Tetramethylharnstoff, N-Methylcaprolactam, N-Methylpyrrolidon, Aceton, Dioxan, Essigester und Tetrahydrofuran.

Die Dihalogenverbindungen der Formel V sind bekannt und zum Teil im Handel erhältlich. Geeignete Verbindungen der Formel V sind beispielsweise 4,4′-Dichlordiphenylsulfon, 4,4′-Difluordiphenylsulfon, 4,4′-Dichlordiphenylsulfoxid, 4,4′-Dichlorbenzophenon, 4,4′-Dichlorazobenzol, 1,2-Bis-(p-chlorphenyl)-tetrafluoräthan und 2,2-Bis-(p-fluorphenyl)-hexafluorpropan.

Die Phenole der Formel VII stellen ebenfalls bekannte, zum Teil im Handel erhältliche Verbindungen dar. Beispiele für geeignete zweiwertige Phenole, die beispielsweise zur Herstellung der erfindungsgemässen Polyätherharze eingesetzt werden können, sind Hydrochinon, Methylhydrochinon, 2,3-Dimethylhydrochinon,

Resorcin, 4,4′-Dihydroxydiphenyl, Bis-(4-hydroxyphenyl)-äther, 4,4′-Dihydroxy-2,6-dimethyldiphenyläther, Bis-(4-hydroxy-3-isobutylphenyl)-äther, Bis-(4-hydroxy-3-isopropylphenyl)-äther, Bis-(4-hydroxy-3-chlorphenyl)-äther, Bis-(4-hydroxy-3- fluorphenyl)-äther, Bis-(4-hydroxy-3-bromphenyl)äther, 4,4′-Dihydroxy-3,6-dimethoxydiphenyläther, 4,4′-Dihydroxy-2,5-diäthoxydiphenyläther, Bis-(4-hydroxyphenyl)-sulfon, 5′-Chlor-4,4′-dihydroxydiphenylsulfon, Bis(4-hydroxyphenyl)-methan (Bisphenol F), Bis-(4-hydroxy-2,6-dimethyl-3-methoxyphenyl)-methan, 2,2-Bis-(4-hydroxyphenyl)-propan (Bisphenol A), 2,2-Bis(3-methyl-4-hydroxyphenyl)-propan, 2,2-Bis-(3-phenyl-4-hydroxy-phenyl)-propan, 2,2-Bis-(3-isopropyl-4-hydroxyphenyl)-propan, 2,2-Bis-(2-isopropyl-4-hydroxyphenyl)-propan, 2,2-Bis-(3,5-dibrom-4-hydroxyphenyl)-propan, 2,2-Bis-(4-hydroxyphenyl)-pentan, 3,3-Bis-(4-hydroxyphenyl)-pentan, Bis-(4-hydroxyphenyl)-phenylmethan, 2,2-Bis-(4-hydroxyphenyl)-1-phenylpropan, 2,2-Bis-(4-hydroxyphenyl)-1,1,1,3,3,3-hexafluorpropan, 2,2-Bis-(3-allyl-4-hydroxyphenyl)-propan und 2,2-Bis-[3-(1-propenyl)-4-hydroxyphenyl]-propan.

Die α,ω-Di-(hydroxyaryloxy)-alkane der Formel VI sind zum Teil bekannte Verbindungen. Soweit es sich um neue Verbindungen handelt, bilden sie ebenfalls einen Gegenstand der Erfindung. Die α,ω-Di-(p-hydroxyphenoxy)-alkane mit 11 und mehr C-Atomen im linearen Alkylenrest sind in der Literatur noch nicht beschrieben worden.

Die Verbindungen der Formel VI können z.B. nach dem in "Journal of Polymer Science: Polymer Physics Edition", Vol. 19 (1981) auf Seite 956 offenbarten Verfahren hergestellt werden, indem man ein Phenol der Formel VII mit einem α,ω-Dibromalkan der Formel VIII

Br-A-Br (VIII),

worin A die gleiche Bedeutung wie in Formel I hat, in Gegenwart von Na-dithionit als Katalysator zu einer Verbindung der Formel VI umsetzt. Verbindungen der Formel VIII, wie zum Beispiel 1,4-Dibrombutan, 1,6-Dibromhexan oder 1,8 Dibromoctan, sind bekannt und zum Teil im Handel erhältlich.

Die erfindungsgemässen Polyätherharze können in der für Thermoplasten üblichen Weise eingesetzt und verarbeitet werden. Sie können beispiels weise als Press-, Ueberzugs- oder Beschichtungsmassen oder zur Herstellung von Filmen Verwendung finden. Vor dem Applizieren können den als Presspulver, Schmelzen oder Lösungen in einem üblichen organischen Lösungsmittel vorliegenden Polyätherharzen die üblichen Zusatzstoffe, wie beispielsweise Füllstoffe, Pigmente, Stabilisatoren oder Verstärkungsmittel, wie Kohlenstoff-, Bor- oder Glasfasern, zugegeben werden. Die erfindungsgemässen Polyätherharze können auch zusammen mit anderen Thermoplasten, wie beispielsweise Polyester, Polyamide, Polyimide, Polyolefine oder Polyurethane, insbesondere mit den konventionellen Polyätherharzen, verarbeitet werden.

Vorzugsweise eignen sich die erfindungsgemässen Polyätherharze als Matrixharze für die Herstellung von Faserverbundsystemen, wobei man als Verstärkungsfasern die üblichen bei der Faserverstärkung von Werkstoffen verwendeten Fasern einsetzen kann. Diese können organische oder anorganische Fasern, Naturfasern oder Synthesefasern, wie Aramid-Fasern, sein und als Faserbündel oder Endlosfasern vorliegen. Beispielsweise verwendet man als Verstärkungsfasern Glas-, Asbest-, Bor-, Kohlenstoff- und Metallfasern, vorzugsweise Kohlenstoff- und Metallfasern. Solche Fasern und Gewebe daraus sind im Handel erhältlich.

Gegenstand vorliegender Erfindung sind somit auch Formstoffe oder Beschichtungen, enthaltend ein erfindungsgemässes Polyätherharz, und Faserverbundstoffe, enthaltend Verstärkungsfasern und als Matrixharz ein erfindungsgemässes Polyätherharz.

Herstellung der Ausgangstoffe

1. p,p′-Dihydroxy-1,4-diphenoxybutan

Unter $N_2$-Spülung werden in einem mit Glaspropellerrührer, Kühler, Thermometer und $N_2$-Anschluss versehenen 2,5 Liter S-Kolben 276 g (2,5 Mol) Hydrochinon, 0,5 g (2,9 mMol) Na-dithionit und 500 ml Aethanol (94 %ig) vorgelegt. Nach dem Aufheizen auf etwa 50° C geht das Hydrochinon in Lösung, und es werden 54 g (0,25 Mol) 1,4-Dibrombutan dazugegeben. Die Reaktionslösung wird bis zum Rückfluss erhitzt und dann tropfenweise mit einer Lösung aus 42,1 g KOH (0,75 Mol), 40 g Eis und 160 ml absolutem Aethanol versehen. Dabei bildet sich ein weisser Niederschlag. Die Reaktionslösung wird dann während 10 Stunden am Rückfluss gehalten. Nach dem Ansäuern mit 30 %iger $H_2SO_4$ wird die Reaktionslösung mit 2 Liter Wasser versehen, auf 70° C erhitzt, anschliessend auf 25° C gekühlt und filtriert. Das Filtrat wird in 2 Liter Wasser suspendiert, auf 70° C erhitzt, anschliessend auf 25° C abgekühlt, filtriert und getrocknet. Ausbeute : 59 g (86 % d. Theorie) eines weissen Pulvers, das zur Reinigung in 75 %igem Aethanol umkristallisiert wird.

Beispiel 1

Unter $N_2$-Spülung werden in einem 750 ml S-Kolben, ausgerüstet mit Glaspropellerrührer, Kühler mit Wasserabscheider und $N_2$-Anschluss, 34,30 g (0,125 Mol) p,p′-Dihydroxy-1,4-diphenoxybutan, 33,74 g (0,1175 Mol) p,p′-Dichlordiphenylsulfon, 135 ml Dimethylsulfoxid und 350 ml Chlorbenzol vorgelegt und unter Rühren auf 60 bis 70° C erhitzt. Bei 62° C liegt eine leicht hellbraune Lösung vor. Dann werden 20,0 g (0,250 Mol) 50 %ige wässrige Natronlauge zugegeben, wobei eine braune, trübe Lösung entsteht. Die Reaktionslösung wird weiter aufgeheizt und bei 119° C destilliert Wasser zusammen mit Chlorbenzol ab. Nach insgesamt 2 Stunden ist eine Temperatur von 156° C erreicht und alles Chlorbenzol ist abdestilliert. Die Temperatur wird während 4 weiteren Stunden auf 155 bis 160° C gehalten, und dann wird die Reaktionslösung vorsichtig mit 200 ml Chlorbenzol verdünnt. Die Temperatur geht auf 110 bis 120° C zurück, das ausgeschiedene Natriumchlorid wird abfiltriert und das Polymer wird im Mixer mit Methanol gefällt. Nach der Filtration wird das Polymer bei 80

bis 90°C getrocknet. Ausbeute: 53,7 g (78,9 % d.Theorie) hellgelbes, flockiges Polymer.

Durch Thermodruckverformung bei einer Temperatur von 140°C und einem Druck von 6,85 MPa werden aus dem Polymer Scheiben mit einem Durchmesser von 62 mm und einer Dicke von 3 mm hergestellt und deren Eigenschaften gemessen.

Tg (DMA (DMA = Dynamic Mechanical Analysis)) = 116°C
Schlagbiegefestigkeit (gemäss DIN 53435) = > 66,7 $kJ/m^2$
Biegefestigkeit (gemäss DIN 53435) = 103 $N/mm^2$
Biegewinkel (gemäss DIN 53435) = > 90°

**Patentansprüche**

1. Lineare Polyätherharze mit einer spezifischen Viskosität von 0,1 bis 2,5, gemessen bei 30°C an einer 2 %-igen Lösung in Dimethylformamid, die, bezogen auf die Gesamtmenge der im Polyätherharz vorhandenen Strukturelemente, 100 bis 1 Mol % des wiederkehrenden Strukturelementes der Formel I

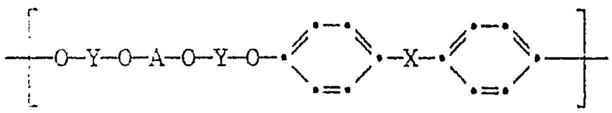 (I)

und 99 bis 0 Mol % des wiederkehrenden Strukturelementes der Formel II

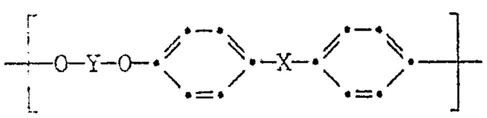 (II)

enthalten, worin A ein lineares unsubstituiertes oder methylsubstituiertes Alkylen mit 1 bis 100 C-Atomen in der linearen Alkylenkette bedeutet, X für $-SO_2-$, -CO-, -SO-, -N=N-, $-CF_2-CF_2-$,

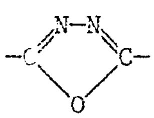 , 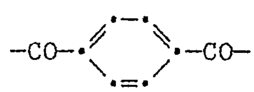 , 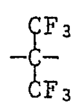 , -CH=CH- , 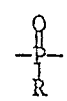 ,

worin R ein Alkyl mit 1 bis 8 C-Atomen bedeutet, oder

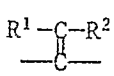 ,

worin $R^1$ und $R^2$ je ein H- oder Halogenatom bedeuten, steht und Y einen Rest der Formel III oder IV

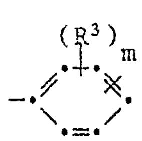 (III) oder 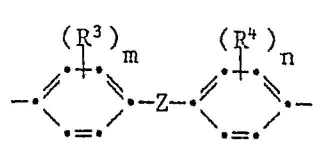 (IV)

bedeutet, worin m und n je für Null oder eine Zahl von 1 bis 4 stehen, $R^3$ und $R^4$ gleich oder verschieden sind und je ein Halogenatom, unsubstituiertes oder phenylsubstituiertes Alkyl mit 1 bis 4 C-Atomen oder Alkoxy mit 1 bis 4 C-Atomen bedeuten, und, wenn m und n je für 1 oder 2 stehen, $R^3$ und $R^4$ auch je ein

Allyl oder 1-Propenyl bedeuten, und Z für eine direkte Bindung oder einen der folgenden Reste -O- , -SO-, $-SO_2-$ , -S-, -S-S- ,

—O— , —SO— , $—SO_2—$ , —S— , —S—S— , 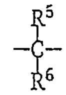 , worin $R^5$ und $R^6$

worin $R^5$ und $R^6$ unabhängig voneinander je ein H-Atom, Alkyl mit 1 bis 4 C-Atomen oder Phenyl bedeuten,

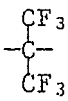 , 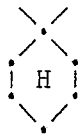 , 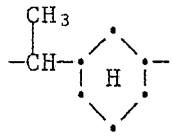 oder 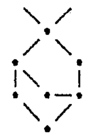 steht.

2. Polyätherharze gemäss Anspruch 1, die 100 bis 20 Mol % des wiederkehrenden Strukturelements der Formel I und 80 bis 0 Mol % des wiederkehrenden Strukturelementes der Formel II enthalten.

3. Polyätherharze gemäss Anspruch 1, die 100 bis 50 Mol % des wiederkehrenden Strukturelementes der Formel I und 50 bis 0 Mol % des wiederkehrenden Strukturelementes der Formel II enthalten.

4. Polyätherharze gemäss Anspruch 1, worin der Rest A in Formel I ein unsubstituiertes Alkylen und 1 bis 20 C-Atomen, insbesondere 4 bis 10 C-Atomen, in der linearen Alkylenkette bedeutet.

5. Polyätherharze gemäss Anspruch 1, worin der Rest X in Formel I und II für $-SO_2-$, -CO-, -SO-, $-CF_2-CF_2-$,

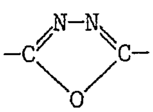 , —N=N— , 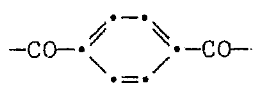 oder 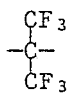 steht.

6. Polyätherharze gemäss Anspruch 1, worin der Rest Y in Formel I für m-oder p-Phenylen, inbesondere p-Phenylen, steht.

7. Polyätherharze gemäss Anspruch 1 oder 6, worin Y in Formel II für einen Rest der Formel III oder IV, worin m und n Null bedeuten und Z für eine direkte Bindung oder einen der folgenden Reste -O-, -SO-, $-SO_2-$,

—S—, —S—S—, $—CH_2—$, 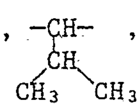 , 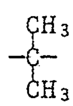 , 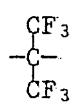 , 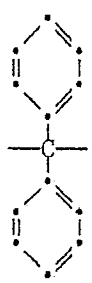 , 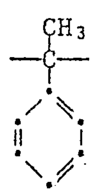 ,

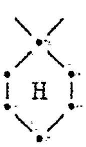 , 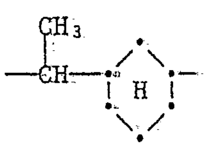 oder 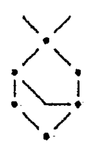 steht.

8. Polyätherharz gemäss Anspruch 1 oder 6, bestehend nur aus dem Strukturelement der Formel I, worin A für Tetramethylen und X für Sulfonyl stehen.

9. Verfahren zur Herstellung von Polyätherharzen gemäss Anspruch 1, enthaltend die wiederkehrenden Strukturelemente der Formeln I und II, dadurch gekennzeichnet, dass man eine Dihalogenverbindung der Formel V

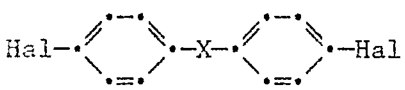

(V)

in äquimolaren Mengen mit einem α,ω-Di-(hydroxyaryloxy)-alkan der Formel VI

HO-Y-O-A-O-Y-OH (VI)

oder mit einem Gemisch aus einer Verbindung der Formel VI und einem darin bis zu 99 Mol %, enthaltenden Phenol der Formel VII

HO-Y-OH (VII),

worin X, A und Y die gleiche Bedeutung wie in Formel I bzw. II haben und Hal für ein Halogenatom, in Gegenwart von Alkali in einem polaren aprotischen Lösungsmittel polykondensiert, bis das erhaltene Polyätherharz eine spezifische Viskosität von 0,1 bis 2,5, gemessen bei 30° C an einer 2 %-igen Lösung in Dimethylformamid, aufweist.

10. Formstoffe oder Beschichtungen, enthaltend ein Polyätherharz gemäss Anspruch 1.

11. Faserverbund, enthaltend Verstärkungsfasern und als Matrixharz ein Polyätherharz gemäss Anspruch 1.